# FASCICULE DE BREVET EUROPEEN

(11) **EP 2 182 473 B1**
(45) Date de publication et mention de la délivrance du brevet: **23.07.2014**
(21) Numéro de dépôt: 09174430.0
(22) Date de dépôt: 29.10.2009
(51) Int. Cl.: G06K 19/077

(54) **Dispositif éléctronique autorisant des communications sans contact en champ proche**
Elektronische Vorrichtung, die kontaktlose Kommunikationen im Nahfeld autorisiert
Electronic device authorising contactless near-field communications

(30) Priorité: 03.11.2008 FR 0857470
(43) Date de publication de la demande: 05.05.2010
(73) Titulaire: Oberthur Technologies, 92300 Levallois-Perret (FR)
(72) Inventeur: Le Garrec, Loïc, 35220, CHATEAUBOURG (FR); Capitaine, Christophe, 35220, CHATEAUBOURG (FR)
(74) Mandataire: Esselin, Sophie

(56) Documents cités:
- WO-A-02/01496
- WO-A-02/11062
- WO-A-03/056510
- WO-A1-03/060820
- WO-A1-2008/127044
- DE-A1-102005 061 249
- DE-U1- 20 110 585
- JP-A- 2004 151 968
- US-A- 5 206 495
- US-A1- 2004 263 319

## Description

### DOMAINE DE L'INVENTION

La présente invention concerne les dispositifs électroniques portables comportant une antenne planaire connectée à au moins un circuit intégré du dispositif, autorisant des communications sans contact en champ proche avec un dispositif externe, et qui comportent en outre un ou des composants périphériques qui sont télé-alimentés par l'antenne. Ces composants périphériques permettent d'apporter des fonctionnalités supplémentaires. Ce sont par exemple, et non limitativement un écran d'affichage, des diodes électroluminescentes, un buzzer, ou un vibreur. L'intégration de telles fonctionnalités supplémentaires va de pair avec l'élargissement de l'offre de service de ces dispositifs électroniques portables.

### DESCRIPTION DE L'ETAT DE L'ART

Les dispositifs électroniques portables ayant par définition des dimensions réduites, la télé-alimentation d'un composant périphérique doit être conçue pour obtenir une alimentation suffisante tout en tenant compte des contraintes de place sur le dispositif.

La demande de brevet internationale WO 02/01496 décrit l'utilisation du couplage d'énergie entre deux antennes, l'une reliée au circuit intégré qui communique avec un lecteur externe, l'autre reliée au circuit périphérique à télé-alimenter. Le problème posé par cette technique, est le faible rendement de la transmission par couplage de l'énergie entre les deux antennes, prohibant l'utilisation de composants périphériques à consommation significative et dégradant l'alimentation du circuit intégré communiquant avec le lecteur.

Une autre technique décrite dans la demande de brevet internationale WO 03/056510, consiste à connecter le ou les circuits périphériques et le circuit intégré qui communique avec le lecteur externe, en parallèle sur l'antenne. Si cette technique est plus efficace que la précédente, elle pose un problème de distribution du courant dans le circuit intégré et les composants périphériques : le courant fourni au circuit intégré est plus faible, ce qui a notamment pour effet de diminuer la portée de la communication sans contact.

La présente invention a pour objet de proposer une autre alternative de télé-alimentation d'un ou plusieurs composants périphériques, qui soit plus efficace, sans effet rétro-actif négatif sur la portée de communication sans contact, et qui soit facile à mettre en oeuvre, en particulier dans des dispositifs de petites dimensions, par exemple dans des objets portables sensiblement plan, tels que des cartes à puce ou des clef USB.

L'antenne réalisée dans ces dispositifs électroniques portables est une antenne planaire, c'est-à-dire une antenne réalisée dans le plan de surface d'une couche support intégrée dans le dispositif, au moyen d'un enroulement d'une piste ou d'un fil métallique formant ainsi une ou plusieurs boucles métalliques planes, dans le plan de surface de la couche support.

### RESUME DE L'INVENTION

L'idée à la base de l'invention, est de réaliser une antenne comportant plusieurs enroulements reliés entre eux par des moyens de conduction en courant, chaque enroulement ayant ses extrémités connectées à des bornes de connexion d'un circuit. L'antenne comprend alors au minimum, un enroulement connecté aux bornes de connexion au circuit intégré apte à établir des communications sans contact avec un système externe, et un enroulement connecté aux bornes de connexion à un circuit périphérique, qui peut comprendre un ou plusieurs composants connectés en série et/ou en parallèle.

Ainsi, l'invention concerne un dispositif électronique portable comportant au moins un circuit intégré et une antenne planaire connectée au dit circuit intégré pour établir une communication sans contact avec un système externe, le dispositif comportant en outre au moins un circuit périphérique connecté à ladite antenne, permettant sa télé-alimentation, **caractérisé en ce que** ladite antenne comporte :
- un enroulement inductif, comprenant une ou plusieurs boucles, dont une extrémité part d'une première borne de connexion au dit circuit intégré et l'autre extrémité arrive sur une autre borne de connexion au dit circuit intégré, et
- un enroulement inductif, comprenant une ou plusieurs boucles, dont une extrémité part d'une première borne de connexion au dit circuit périphérique et l'autre extrémité arrive sur une autre borne de connexion au dit circuit périphérique,
   et en ce que lesdits enroulements sont reliés par des moyens conducteurs de courant.

Suivant un mode de réalisation, les enroulements de l'antenne, le circuit intégré et le ou les circuits périphériques sont intégrés dans le corps d'un objet plastique plan, de préférence une carte à puce au format ISO 7816.

Suivant un autre mode de réalisation, un ou des circuits périphériques et les enroulements associés sont réalisés dans un plan d'un boitier dans une cavité duquel l'objet plastique plan comportant le circuit intégré de communication sans contact et l'enroulement associé, est placé.

D'autres avantages et caractéristiques de l'invention sont détaillés dans la description suivante de modes de réalisation de l'invention, donnée à titre indicatif et non limitatif, et en référence aux dessins annexés dans lesquels :
- la figure 1 est un schéma de principe d'une antenne comprenant trois enroulements reliés selon l'invention;
- la figure 2 illustre un premier mode de réalisation d'une antenne selon l'invention, dans un même plan de surface;
- la figure 3 est un schéma électrique équivalent de l'antenne de la figure 2;
- la figure 4 illustre un autre mode de réalisation des enroulements d'une antenne selon l'invention, dans des plans de surface différents;
- les figures 5a à 5f sont des vues de dessus et en coupe illustrant un mode de réalisation d'une antenne à deux enroulements, avec un enroulement sur chaque face d'une couche diélectrique support, plus particulièrement destiné à être intégré dans une carte à microcircuit au format ID 1;
- la figure 6 illustre les courbes de niveau de rétromodulation obtenues avec une carte à microcircuit intégrant une telle couche support, avec une antenne selon l'invention, et avec deux antennes non reliées selon l'état de l'art;
- les figures 7a et 7b sont des vues en coupe et de dessus illustrant un autre mode de réalisation d'une antenne selon l'invention, sur deux supports différents.

### DESCRIPTION DETAILLEE

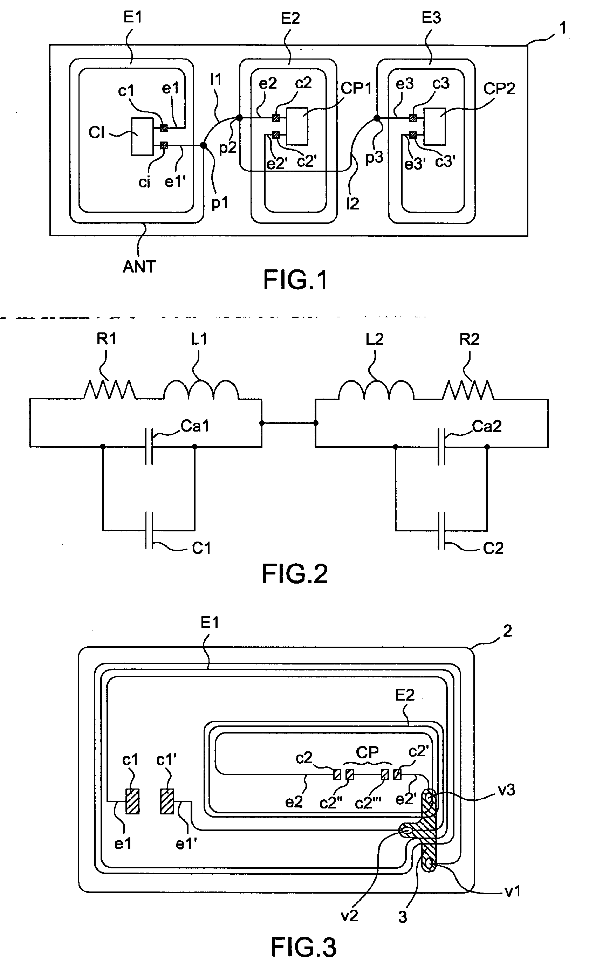

La figure 1 est un schéma de principe d'un dispositif électronique portable 1, selon l'invention. II comporte une antenne planaire ANT connectée à un circuit intégré CI apte à communiquer en champ proche avec un système externe et à être télé-alimenté par ce système, typiquement suivant la norme ISO 14443. Il comporte également des composants périphériques, dans l'exemple deux composants CP1 et CP2, télé-alimentés par l'antenne ANT. Ces composants périphériques ne communiquent pas avec le lecteur. Un composant périphérique sera par exemple une diode, un buzzer ou un vibreur, ou encore un écran, qui peuvent assurer notamment une fonction d'interface utilisateur, tel que par exemple, une fonction d'avertissement de la présence du champ d'un lecteur activée par l'alimentation du ou des composants. L'avertissement se traduit par leur activation : émission d'un spot lumineux, d'un son, vibration. Cette fonction peut avertir de l'ouverture d'une session de communication avec le lecteur externe. Mais on peut avoir d'autres composants périphériques, tels que par exemple une batterie ou un disque dur miniaturisé. Ces composants périphériques permettent d'une manière générale d'élargir les fonctionnalités du dispositif électronique portable et/ou d'améliorer l'interface utilisateur.

L'antenne est en pratique réalisée selon toute technique connue dans un matériau métallique adapté, par exemple suivant une technologie de gravure ou sérigraphie de métal, ou encore suivant une technologie filaire, avec un fil métallique gainé d'isolant.

L'antenne ANT comporte plusieurs enroulements reliés, permettant la circulation du courant entre chaque enroulement.

Plus particulièrement dans l'exemple illustré, l'antenne comprend :
- un enroulement E1 dont une extrémité e1 est reliée à une borne de connexion c1 au circuit intégré CI, et l'autre extrémité e1' est reliée à une autre borne de connexion c1' au circuit intégré CI;
- un enroulement E2 dont une extrémité e2 est reliée à une borne de connexion c2 à un composant périphérique CP1, et l'autre extrémité e2' est reliée à une autre borne de connexion c2' au composant périphérique CP1;
- un enroulement E3 dont une extrémité e3 est reliée à une borne de connexion c3 à un composant périphérique CP2, et l'autre extrémité e3' est reliée à une autre borne de connexion c3' au composant périphérique CP2.

Dans l'invention, il faut comprendre par composant périphérique tel que CP1 ou CP2, un circuit périphérique, une diode par exemple, ou bien plusieurs circuits périphériques connectés en série ou en parallèle, deux diodes en série par exemple.

Les enroulements de l'antenne sont reliés entre eux, par des moyens de conduction en courant. Typiquement une liaison conductrice I1 est réalisée entre deux points p1 et p2 des enroulements E1 et E2, et une liaison conductrice I2 est réalisée entre deux points p2 et p3 des enroulements E2 et E3.

Ces points de connexion p1, p2, p3 sont de préférence chacun situé à proximité d'une extrémité de l'enroulement correspondant E1, E2, E3, dans l'exemple respectivement l'extrémité e1', e2 et e3. On a en effet pu remarquer que de tels points de connexion permettaient d'obtenir les meilleurs résultats en termes d'alimentation en courant de chacun des composants, circuit intégré et composants périphériques, avec une portée de communication optimale.

L'antenne ainsi réalisée a une fréquence de résonnance qui est fonction des caractéristiques des enroulements de l'antenne et des caractéristiques des composants qui y sont reliés, notamment leur capacité d'entrée et leur résistance équivalente. Ceci est illustré sur la figure 2 qui représente un schéma électrique équivalent d'une antenne selon l'invention, qui comporterait deux enroulements, par exemple les enroulements E1 et E2 de la figure 1, respectivement connectés au circuit intégré CI et au composant périphérique CP1.

L'ensemble E1, CI, E2, CP1 selon l'invention est équivalent à deux antennes qui auraient chacune leur propre fréquence de résonance si elles fonctionnaient seules. Comme elles sont reliées, on obtient une antenne qui résonne à une fréquence de résonance déterminée pour correspondre à la fréquence du système de communication sans contact.

Plus précisément, si on reprend la figure 2, on a :
- un premier circuit résonant correspondant à l'enroulement E1 et au circuit intégré CI, qui comprend : une capacité C1, en parallèle sur une capacité Ca1, en parallèle sur l'ensemble série d'une résistance R1 et d'une inductance L1 ; où R1 est la résistance équivalente du circuit intégré CI, L1, l'inductance ramenée par l'enroulement E1, Ca1, la capacité ramenée par l'enroulement E1, et C1 la capacité en entrée du circuit intégré. De manière classique, la fréquence de résonance propre f₁ de ce circuit si il fonctionnait isolément serait telle que L1.C1 (2πf₁)²=1
- un deuxième circuit résonant correspondant à l'enroulement E2 et au composant périphérique CP1 comprenant : une capacité C2, en parallèle sur une capacité Ca2, en parallèle sur l'ensemble série d'une résistance R2 et d'une inductance L2 ; où R2 est la résistance équivalente du composant périphérique CP1, L2, l'inductance ramenée par l'enroulement E2, Ca2, la capacité ramenée par l'enroulement E2, et C2 la capacité en entrée du composant périphérique. La fréquence de résonance propre f₂ de ce circuit s'il fonctionnait isolément serait telle que : L2.C2(2πf₂)²=1.

Les enroulements E1 et E2 de l'antenne selon l'invention étant reliés, les deux circuits résonnants sont reliés : on obtient une antenne qui résonne à une fréquence f telle que (2πf)²=(L1+L2)/(L1.L2(C1+C2)).

Les enroulements d'une antenne selon l'invention sont ainsi dimensionnés en fonction des caractéristiques du circuit intégré et du composant périphérique pour obtenir une fréquence f de résonnance de l'antenne correspondant à la fréquence optimale recherchée pour le système de communication sans contact en champ proche, soit typiquement une fréquence voisine de 13,56 MHz (megahertz). En pratique, les fréquences f1 et f2 de chaque circuit résonnant considéré isolément sont comprises entre 10 MHz et 25 MHz.

On rappelle que dans le domaine des communications en champ proche, la portée est typiquement inférieure à 20 centimètres, la communication s'établissant normalement, par action volontaire du porteur du dispositif électronique portable, qui positionne son dispositif dans une zone de lecteur prévue à cet effet.

Dans ce domaine, des dispositifs électroniques portables largement utilisés sont les cartes à microcircuit conforme à la norme ISO 7816, ou encore des passeports électroniques, voire des clefs USB. Ces différents dispositifs sont des objets sensiblement plan, en matériau diélectrique : du plastique pour les cartes et les clefs, généralement un matériau fibreux tel que du papier pour les passeports électroniques. Ce sont des objets sensiblement plan de dimensions normalisées, qui peuvent en outre présenter différentes contraintes mécaniques qui limitent la place disponible à la réalisation d'une antenne.

Différents modes de réalisation d'une antenne selon l'invention vont être présentés, qui sont notamment applicables à de tels objets.

Dans la suite, le terme circuit intégré désigne le circuit intégré apte à établir une communication sans contact en champ proche avec un système externe et un composant périphérique, un composant télé-alimenté par l'antenne. Un composant périphérique n'entre pas en communication avec le système externe.

La figure 3 est une vue de dessus d'une couche support sur laquelle est formée une antenne suivant un premier mode de réalisation conforme à l'invention.

La couche support d'antenne est par exemple une couche destinée à être intégrée dans l'épaisseur du corps d'un objet sensiblement plan, tel qu'une carte à puce ou un passeport électronique par exemple.

Dans l'exemple, la couche support comprend les bornes de connexion c1, c1' au circuit intégré et les bornes de connexion à un composant périphérique. Dans l'exemple, le composant périphérique comprend deux circuits en série, d'où les deux bornes de connexion supplémentaire sur la figure c2", c2"', entre les bornes de connexion les plus "externes" c2 et c2'. On peut toujours considérer pour simplifier qu'il y a un composant périphérique CP connecté entre les deux bornes c2 et c2'.

L'antenne comprend deux enroulements réalisés dans le plan de surface du support 2. Un enroulement E1 a ses deux extrémités e1 et e1' connectées aux bornes c1 et c1' de connexion pour la connexion au circuit intégré CI; un enroulement E2 a ses deux extrémités e2 et e2' connectées aux bornes c2, c2', pour la connexion au composant périphérique CP.

Cette couche support d'antenne peut être intégrée dans l'épaisseur d'un objet portable plan, tel qu'une carte à microcircuit, une clef USB ou un passeport électronique suivant toute technique connue.

C'est la raison pour laquelle le circuit intégré et le composant périphérique ne sont pas représentés sur la figure 2. Ils peuvent être en effet connectés à leurs bornes de connexion respectives sur la couche support 2 dans une phase de fabrication ultérieure de l'objet portable, selon toute technique connue.

L'enroulement E2 est de préférence réalisé à l'intérieur de l'enroulement E1, comme illustré, ce qui permet notamment d'utiliser de manière optimum la surface disponible. Dans ce cas l'enroulement extérieur qui forme une antenne la plus grande, est de préférence connecté au circuit intégré, l'enroulement E2, réalisé à l'intérieur de l'enroulement E1 étant plus petit, mais suffisant pour assurer la télé-alimentation du composant périphérique CP1.

Dans l'exemple illustré, l'enroulement E1 part de l'extrémité e1, connectée sur la borne c1, pour former des spires ou des boucles dans le plan de surface du support qui sont de plus en plus larges, jusqu'à arriver sur un plot v1 avec trou métallisé, qui est connecté à un plot v2 avec trou métallisé par un court-circuit 3 réalisé en face arrière du support 2, puis se continue jusqu'à l'extrémité e1' connectée sur la borne c1'. '.

L'enroulement E2 part de l'extrémité e2, connectée sur la borne c2, pour former des spires ou des boucles dans le plan de surface du support 2 qui sont de plus en plus larges, jusqu'à arriver sur le plot v2 avec trou métallisé, qui est connecté à un plot v3 avec trou métallisé par le court-circuit 3 en face arrière du support 2, puis se continue jusqu'à l'extrémité e2' connectée sur la borne c2'.

Les plots avec trous métallisés v1, v2, v3 correspondent à un mode de réalisation des enroulements par gravure ou sérigraphie, nécessitant l'utilisation de ponts de connexion pour permettre d'avoir les deux extrémités de l'enroulement du même côté, dans l'exemple à l'intérieur de l'enroulement considéré. Ces trous sont ici utilisés pour assurer en même temps la connexion des deux enroulements E1 et E2, selon le principe de l'invention. Ainsi dans l'exemple, un motif de court-circuit 3 permet de relier les trois plots v1, v2 et v3, qui permet à la fois de finir la formation de chacun des enroulements, et de réaliser la liaison entre les deux enroulements. Cette liaison est bien assurée à proximité d'une extrémité de chaque enroulement. On entend par proximité, le fait que la distance entre l'extrémité de l'enroulement considéré, par exemple l'extrémité e2' de l'enroulement E2, et le point de connexion où est réalisée la liaison de cet enroulement E2 à l'autre enroulement E1, c'est-à-dire le point v2 ou v3, est petite devant la longueur de l'enroulement E2 considéré.

Une antenne comprenant deux enroulements ou plus, peut ainsi être réalisée comme il vient d'être décrit, en surface d'un support plan.

Le support d'antenne obtenu peut être intégré selon les techniques habituelles bien connues, dans une carte à microcircuit, un passeport électronique ou une clef USB, et plus généralement dans tout objet portable sensiblement plan, dans lequel les différentes bornes de connexion seront convenablement connectées à un circuit intégré et à un ou des composants périphériques.

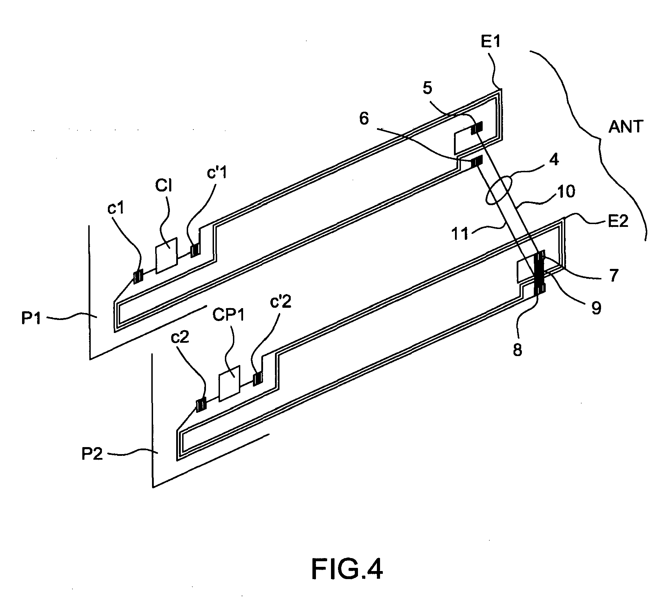

La figure 4 illustre un autre mode de réalisation d'une antenne selon l'invention, dans lequel les enroulements ne sont pas réalisés dans le même plan. Sur la figure, on a ainsi illustré de façon schématique, en perspective, deux enroulements E1 et E2 qui forment une antenne ANT d'un circuit intégré CI d'un dispositif électronique portable, l'enroulement E1 étant réalisé dans un plan P1, et connecté dans ce plan au circuit intégré CI, l'enroulement E2 étant réalisé dans un plan P2 parallèle au plan P1, et connecté dans ce plan à un composant périphérique CP1 et les deux enroulements étant reliés par une liaison 4, qui dans l'exemple comprend :

Deux contacts 5 et 6 dans le plan P1, deux contacts 7 et 8 et un court-circuit 9 entre ces deux contacts dans le plan P2, et deux liaisons 10 et 11.

Typiquement les plans P1 et P2 peuvent être deux couches supports distinctes, ou bien les faces verso et recto d'une même couche support. Dans ce cas les liaisons 10 et 11 seront typiquement réalisées par des trous métallisés.

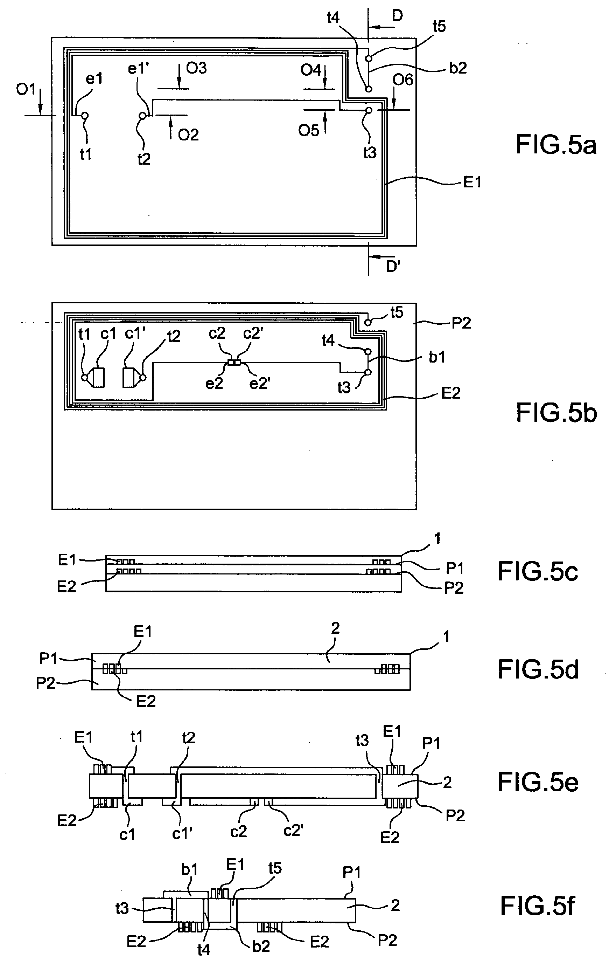

Les figures 5a à 5f illustrent une variante de réalisation correspondante, des deux enroulements de l'antenne chacun sur un plan de surface différent dans l'épaisseur du corps d'un objet plan, préférentiellement une carte à microcircuit.

La figure 5a représente le plan de surface P1 supportant l'enroulement E1.

La figure 5b représente le plan P2 supportant l'enroulement E2 et les bornes de connexion c1, c1' au circuit intégré et les bornes de connexion c2, c2' au composant périphérique.

On peut considérer que les deux plans tels que représentés sont destinés à être empilés dans le corps d'un objet plan 1, comme illustré sur la figure 5c.

De préférence, correspondant à une réalisation pratique d'un support plan d'antenne, la figure 5b est à regarder comme une vue de dessus en transparence du plan P2, les éléments représentés sur la figure étant en réalité réalisés à l'arrière de cette face, correspondant à la réalisation des enroulements E1 et E2 chacun sur une face respective d'une même couche support 2, destinée à être intégré dans l'épaisseur du corps d'un objet plan 1, comme illustré sur la figure 5d.

Des trous métallisés et des pistes de court-circuit judicieusement disposés permettent d'assurer :
- la connexion des extrémités e1 et e1' de l'enroulement E1 aux bornes de connexion c1 et c1', pour la connexion du circuit intégré CI : trous t1 et t2.
- le passage de la fin de l'enroulement E1 à l'intérieur de cet enroulement pour amener l'extrémité e1' de cet enroulement au droit du trou métallisé correspondant t2 : trous t5, t4, t3, piste b1 de court-circuit t4-t5, piste b2 de court-circuit t4-t3.
- le passage de la fin de l'enroulement E2 à l'intérieur de cet enroulement pour amener l'extrémité e2' de cet enroulement sur la borne de connexion correspondante c2' : trous t5, t4, t3, piste b1 de court-circuit t4-t5, piste b2 de court-circuit t4-t3.

La figure 5e est une vue en coupe transversale suivant la ligne de coupe 01,02,03,04,05, et la figure 5f est une vue en coupe transversale suivant la ligne de coupe D, D'. Ces figures montrent les liaisons sur et entre les deux faces, pour une réalisation correspondante sur les faces verso (P1) et recto (P2) d'une même couche support 2 comme sur la figure 5d.

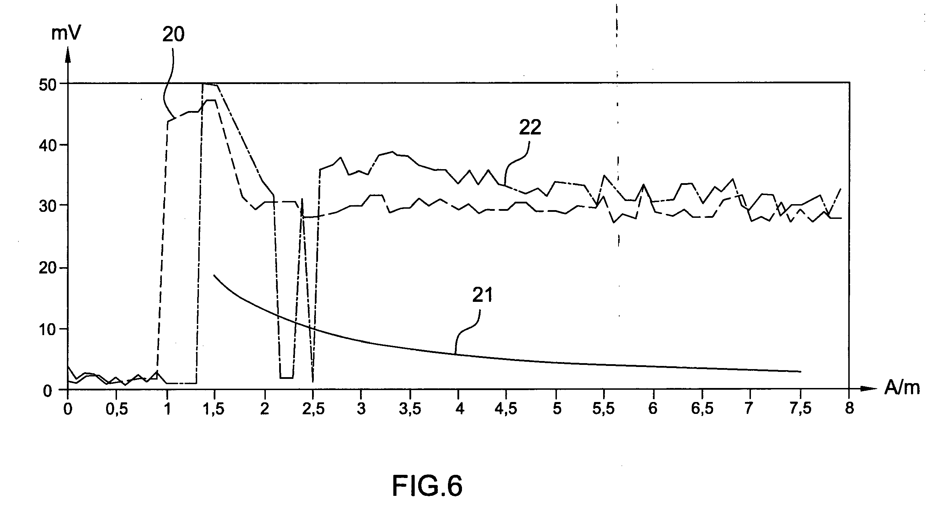

Une application pratique d'un tel mode de réalisation est une carte à microcircuit au format ISO 7816, avec un enroulement E1 au format ID 1, c'est-à-dire épousant sensiblement le contour de la carte, et connecté au circuit intégré et un enroulement E2 au format demi-ID 1, c'est-à-dire épousant sensiblement le contour de la moitié supérieure de la carte, et connecté au composant périphérique. La figure 6 montre la courbe 20 du niveau de rétro-modulation, mesuré en millivolts, obtenue avec une antenne correspondante, avec un banc de test normalisée ISO-10373. Cette courbe montre qu'avec l'antenne ainsi obtenue selon l'invention, le niveau de rétro-modulation mesuré est partout au-dessus de la courbe limite 21 imposée par la norme. La courbe 22 est obtenue avec les deux mêmes enroulements E1 et E2 connectés de la même façon au circuit intégré et au composant périphérique, mais non reliés : dans ce cas, la courbe est très chahutée et s'écroule sous le niveau minimal imposé, en plusieurs points. Cette figure 6 montre tous les avantages d'une antenne selon l'invention.

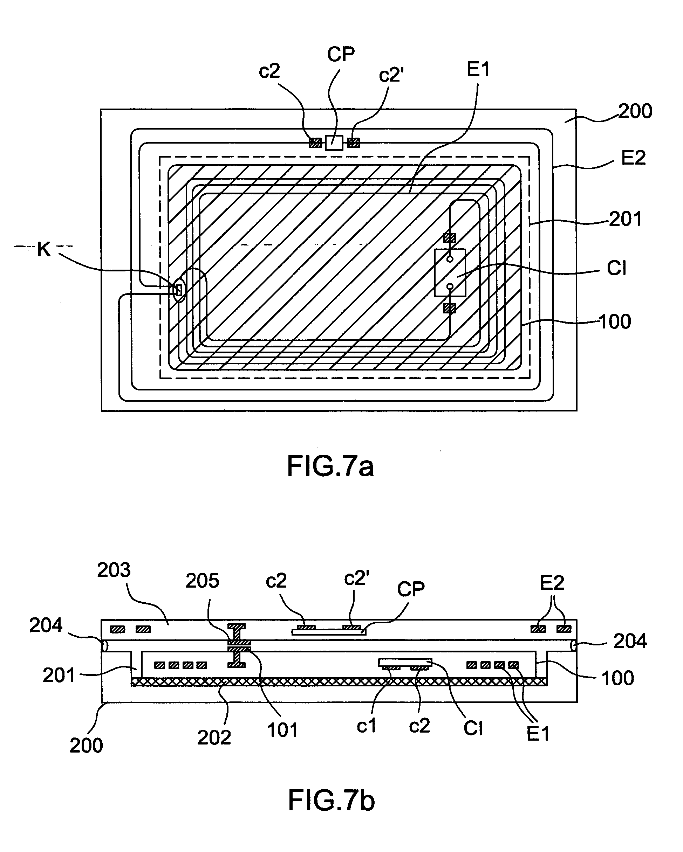

Un autre mode de réalisation de l'invention est illustré en figures 7a et 7b. Dans ce mode de réalisation, les deux enroulements E1 et E2 sont réalisés dans des plans de surface différents. Le premier enroulement E1 est réalisé dans un objet plan 100 destiné à être placé dans un boitier 200, dans une cavité 201 ménagée à cet effet. L'objet plan 100, typiquement une carte à microcircuit, comprend ainsi dans son épaisseur l'enroulement E1 dont les extrémités sont connectées aux bornes de connexion c1 et c1' au circuit intégré, et le circuit intégré CI connecté à ces bornes c1 et c1', par toute technique connue, par exemple par connexion directe sur ces plots (montage flip-chip), comme illustré schématiquement sur la figure 7b.

L'enroulement E2 et le composant périphérique CP associé, sont formés dans le boitier, dans un plan parallèle de l'objet 100, et de préférence dans le couvercle 203 du boitier (figure 7b). La référence 204 sur la figure 7b représente les charnières, permettant de relever ou rabaisser le couvercle du boitier. La liaison K entre les deux enroulements peut alors être réalisée simplement, en prévoyant des contacts de surface sui se correspondent, l'un, 101, en surface de l'objet plan 100, l'autre 205, en surface de la face interne (intérieure) du couvercle 203. Le contact de surface 101 sur l'objet plan est connecté à l'enroulement E1 par un trou métallisé, comme illustré sur la figure 7b.

Dans l'exemple illustré, l'enroulement E2 et le composant périphérique sont avantageusement intégrés dans l'épaisseur du couvercle, par exemple en utilisant une technique de moulage, pour les protéger. On prévoit alors un trou métallisé dans le couvercle entre le plan de l'enroulement et la surface du couvercle pour relier l'enroulement E2 au contact de surface 205.

Des variantes de ce mode de réalisation peuvent être envisagées. Notamment l'enroulement et le composant périphérique peuvent être intégrés d'autres manières dans le boitier, et la connexion entre cet enroulement de composant périphérique et l'enroulement dans l'objet plan peut être réalisée différemment, par exemple à l'intérieur de la cavité par des moyens de connexion adaptés.

D'autres composants périphériques et leurs enroulements peuvent être intégrés dans le boitier et/ou dans l'objet portable 100. Dans tous les cas, l'antenne du dispositif est formée par tous ces enroulements reliés entre eux. Les enroulements sont reliés à l'intérieur du support sur ou dans lequel ils sont réalisés. Les enroulements du boitier et de l'objet portable sont reliés entre eux quant l'objet est placé dans le boitier, par tous moyens adaptés.

Les différents enroulements de l'antenne, situés dans le boitier 200 et dans l'objet portable 100, sont chacun définis en sorte qu'au final, lorsqu'ils sont reliés, l'antenne a alors la fréquence de résonnance voulue, voisine de 13,56 MHz.

Un tel dispositif portable formé d'un objet plan placé dans un boitier peut avantageusement être utilisé en liaison avec une autre entité électronique portable, pour permettre à cette entité de réaliser des fonctionnalités supplémentaires. On prévoit alors avantageusement une couche de ferrite 202 dans le fond de la cavité, pour empêcher les perturbations de champ qui pourraient être causées par des éléments métalliques au voisinage de l'objet.

Dans un exemple, l'entité électronique portable est un téléphone portable et l'objet plan est une carte bancaire qui permet de réaliser des fonctionnalités supplémentaires avec le téléphone portable, typiquement des paiements sécurisés.

L'invention qui vient d'être décrite en relation avec différents modes de réalisation permet de réaliser un dispositif électronique portable, permettant des communications sans contact en champ proche, avec des composants périphériques télé-alimentés, qui amènent des fonctionnalités supplémentaires, sans diminuer la qualité de la communication.

L'invention ne se limite pas aux exemples de réalisation décrits. Notamment, les exemples illustrés correspondent à des enroulements d'antenne obtenus par gravure ou sérigraphie, qui nécessitent l'emploi de trous métallisés pour faire des ponts pour les croisements de pistes. Mais on sait réaliser des enroulements en technologie filaire, avec du fil gainé d'isolant, qui permet des croisements dans le plan.

Ainsi, selon la technologie, la liaison entre les enroulements utilisera plus ou moins de trous métallisés. La liaison entre les enroulements peut aussi comprendre un seul point de connexion sur chaque enroulement.

Selon les possibilités d'implantation des enroulements, par exemple selon les zones réservées à l'embossage effectivement utilisées à cet effet, selon les dimensions de l'objet plan, par exemple une carte aux dimensions normalisées ISO 7816, ou aux dimensions réduites (carte sim), il est possible de réaliser plusieurs enroulements, permettant d'intégrer plusieurs composants périphériques. Tous les enroulements de l'antenne sont alors reliés entre eux par des moyens conducteurs de courant. De préférence les enroulements disposés sur un même plan de surface, seront tels qu'un premier enroulement est réalisé à l'intérieur d'un deuxième enroulement plus grand, et ainsi de suite jusqu'au dernier enroulement qui sera le plus grand.

De préférence, le plus grand enroulement sera connecté au circuit intégré assurant les communications sans contact avec un système externe, les autres enroulements des composants périphériques étant de dimensions inférieures ou égales aux dimensions de l'enroulement du circuit intégré.

Les bornes de connexion aux circuit intégré et au(x) composant(s) ou circuit(s) périphérique(s) peuvent selon les modes de réalisation, être réalisés sur un même plan, ou sur des plans différents, ou au verso et au recto d'une même couche, et les circuits eux-mêmes peuvent être connectés sur ces bornes de différentes manières suivant les techniques habituelles, en particulier les techniques utilisées dans le domaine des cartes à microcircuit.

## Revendications

1. Dispositif électronique comportant au moins un circuit intégré (CI) et une antenne planaire (tant) connectée au dit circuit intégré pour établir une communication sans contact en champ proche avec un système externe, le dispositif comportant en outre au moins un composant périphérique (CP1) connecté à ladite antenne, permettant sa télé-alimentation, **caractérisé en ce que** ladite antenne comporte :
- un enroulement inductif (E1), comprenant une ou plusieurs boucles, dont une extrémité (e1) part d'une première borne de connexion (c1) au dit circuit intégré et l'autre extrémité (e1') arrive sur une autre borne de connexion (c1') au dit circuit intégré, et
- un enroulement inductif (E2), comprenant une ou plusieurs boucles, dont une extrémité (e2) part d'une première borne de connexion (c2) au dit composant périphérique et l'autre extrémité (e2') arrive sur une autre borne de connexion (c2') au dit composant périphérique,
et **en ce que** lesdits enroulements sont reliés par des moyens conducteurs de courant (v1, v2, v3, 3).

2. Dispositif électronique selon la revendication 1, dans lequel les moyens conducteurs de courant reliant deux enroulements de l'antenne sont tels qu'ils relient un ou plusieurs points de connexion sur chaque enroulement, lesdits points de connexion d'un enroulement étant situés proche d'une extrémité dudit enroulement.

3. Dispositif électronique selon la revendication 1 ou 2, dans lequel lesdits moyens conducteurs de courant comprennent des trous métallisés.

4. Dispositif électronique selon l'une quelconque des revendications précédentes, dans lequel deux ou plus enroulements de l'antenne sont disposés sur un même plan de surface, tel qu'un premier enroulement est réalisé à l'intérieur d'un deuxième enroulement plus grand, et ainsi de suite jusqu'au dernier enroulement.

5. Dispositif électronique selon l'une des revendications précédentes, dans lequel chaque composant périphérique comprend un circuit ou plusieurs circuits connectés en série et/ou en parallèle entre lesdites première (c2) et deuxième (c2') bornes de connexion au dit composant périphérique.

6. Dispositif électronique selon l'une quelconque des revendications précédentes, dans lequel au moins l'enroulement (E1) du circuit intégré et le circuit intégré (CI) sont intégrés dans l'épaisseur d'un objet en matériau diélectrique sensiblement plan (1), ledit enroulement étant formé sur une face d'une couche support (2) intégrée dans l'épaisseur dudit objet.

7. Dispositif selon la revendication 6, dans lequel au moins un enroulement (E2) d'un composant périphérique et ledit composant périphérique (C2) sont intégrés dans l'épaisseur dudit objet sensiblement plan (1).

8. Dispositif selon la revendication 7, dans lequel ledit enroulement de composant périphérique et ledit enroulement du circuit intégré sont formés sur la même face de ladite couche support.

9. Dispositif selon la revendication 7, dans lequel ledit enroulement de composant périphérique et ledit enroulement du circuit intégré sont respectivement formés sur des faces opposées de ladite couche support.

10. Dispositif selon l'une quelconque des revendications 7 à 9, dans lequel les bornes de connexion au circuit intégré et les bornes de connexion au composant périphérique sont réalisées sur une même face de ladite couche support.

11. Dispositif selon la revendication 6, dans lequel ledit objet plastique (100) est placé dans une cavité (201) d'un boitier (200), et dans lequel au moins un enroulement (E2) d'un composant périphérique et ledit composant périphérique (CP1) sont disposés dans ledit boitier, ledit enroulement du composant périphérique étant formé dans un plan parallèle dudit objet (100).

12. Dispositif selon la revendication 11, dans lequel ledit enroulement du composant périphérique et ledit composant périphérique sont formés sur une face interne d'un couvercle (203) dudit boitier ou intégrés dans l'épaisseur de ce couvercle, des plots de contacts (205, 101) des enroulements étant respectivement prévus en correspondance sur ledit couvercle et en surface dudit objet plastique plan, pour venir en contact lorsque ledit couvercle est refermé par-dessus l'objet sensiblement plan, reliant ainsi lesdits enroulements (E1, E2) de circuit intégré et de composant périphérique.

13. Dispositif selon l'une quelconque des revendications 6 à 12, dans lequel ledit objet diélectrique plan est une carte à puce au format ISO 7816 ou un passeport électronique.

14. Dispositif selon l'une quelconque des revendications précédentes, dans lequel un composant périphérique a une fonction d'avertissement de la présence d'un champ d'un lecteur, activée par l'alimentation dudit composant.

## Patentansprüche

1. Elektronische Vorrichtung, die wenigstens eine integrierte Schaltung (CI) und eine planare Antenne (ANT) umfasst, die mit der integrierten Schaltung verbunden ist, um kontaktlose Nahfeld-Kommunikation mit einem externen System aufzubauen, wobei die Vorrichtung ferner wenigstens eine periphere Komponente (CP1) umfasst, die mit der Antenne verbunden ist, so dass diese ferngespeist werden kann, **dadurch gekennzeichnet, dass** die Antenne Folgendes umfasst:
- eine induktive Wicklung (E1), die eine oder mehrere Schleifen umfasst, von denen ein Ende (e1) von einem ersten Verbindungsanschluss (c1) an der integrierten Schaltung ausgeht und deren anderes Ende (e1') an einem anderen Verbindungsanschluss (c1') an der integrierten Schaltung ankommt; und
- eine induktive Wicklung (E2), die eine oder mehrere Schleifen umfasst, von denen ein Ende (e2) von einem ersten Verbindungsanschluss (c2) an der peripheren Komponente ausgeht und deren anderes Ende (e2') an einem anderen Verbindungsanschluss (c2') an der peripheren Komponente ankommt,
und dadurch, dass die Wicklungen durch Stromleitmittel (v1, v2, v3, 3) verbunden sind.

2. Elektronische Vorrichtung nach Anspruch 1, wobei die Stromleitmittel, die zwei Wicklungen der Antenne verbinden, derart sind, dass sie einen oder mehrere Verbindungspunkte auf jeder Wicklung verbinden, wobei sich die Verbindungspunkte einer Wicklung nahe an einem Ende der Wicklung befinden.

3. Elektronische Vorrichtung nach Anspruch 1 oder 2, wobei die Stromverbindungsmittel durchmetallisierte Löcher umfassen.

4. Elektronische Vorrichtung nach einem der vorherigen Ansprüche, wobei zwei oder mehr Wicklungen der Antenne auf einer selben Oberflächenebene angeordnet sind, so dass eine erste Wicklung im Innern einer zweiten größeren Wicklung realisiert wird, und so weiter, bis zur letzten Wicklung.

5. Elektronische Vorrichtung nach einem der vorherigen Ansprüche, wobei jede periphere Komponente eine oder mehrere Schaltungen umfasst, die in Serie und/oder parallel zwischen dem ersten (c2) und dem zweiten (c2') Verbindungsanschluss an der peripheren Komponente geschaltet sind.

6. Elektronische Vorrichtung nach einem der vorherigen Ansprüche, wobei wenigstens die Wicklung (E1) der integrierten Schaltung und die integrierte Schaltung (CI) in die Dicke eines im Wesentlichen flachen Objekts (1) aus dielektrischem Material integriert sind, wobei die Wicklung auf einer Fläche einer Trägerschicht (2) ausgebildet ist, die in die Dicke des Objekts integriert ist.

7. Vorrichtung nach Anspruch 6, wobei wenigstens eine Wicklung (E2) einer peripheren Komponente und die periphere Komponente (C2) in die Dicke des im Wesentlichen flachen Objekts (1) integriert sind.

8. Vorrichtung nach Anspruch 7, wobei die Wicklung der peripheren Komponente und die Wicklung der integrierten Schaltung auf einer selben Fläche der Trägerschicht ausgebildet sind.

9. Vorrichtung nach Anspruch 7, wobei die Wicklung der peripheren Komponente und die Wicklung der integrierten Schaltung jeweils auf Flächen gegenüber der Trägerschicht ausgebildet sind.

10. Vorrichtung nach einem der Ansprüche 7 bis 9, wobei die Verbindungsanschlüsse an der integrierten Schaltung und die Verbindungsanschlüsse an der peripheren Komponente auf einer selben Fläche der Trägerschicht produziert werden.

11. Vorrichtung nach Anspruch 6, wobei das Plastikobjekt (100) in einen Hohlraum (201) eines Gehäuses (200) platziert ist, und wobei wenigstens eine Wicklung (E2) einer peripheren Komponente und die periphere Komponente (CP1) in dem Gehäuse angeordnet sind, wobei die Wicklung der peripheren Komponente in einer Ebene parallel zu dem Objekt (100) ausgebildet ist.

12. Vorrichtung nach Anspruch 11, wobei die Wicklung der peripheren Komponente und die periphere Komponente auf einer Innenfläche einer Abdeckung (203) des Gehäuses ausgebildet oder in der Dicke derselben Abdeckung integriert sind, wobei Kontaktstellen (205, 101) der Wicklungen jeweils entsprechend auf der Abdeckung und auf der Oberfläche des flachen Plastikobjekts vorgesehen sind, so dass sie miteinander in Kontakt kommen, wenn die Abdeckung über dem im Wesentlichen flachen Objekt geschlossen ist, um so die Wicklungen (E1, E2) der integrierten Schaltung und der peripheren Komponente zu verbinden.

13. Vorrichtung nach einem der Ansprüche 6 bis 12, wobei das flache dielektrische Objekt eine Chipkarte im ISO 7816 Format oder ein elektronischer Pass ist.

14. Vorrichtung nach einem der vorherigen Ansprüche, wobei eine Funktion einer peripheren Komponente darin besteht, vor der Anwesenheit eines Feldes eines Lesers zu warnen, wobei diese Funktion durch die Speisung der Komponente aktiviert wird.

## Claims

1. An electronic device comprising at least one integrated circuit (CI) and one planar antenna (ANT) connected to said integrated circuit to establish contactless near-field communication with an external system, said device further comprising at least one peripheral component (CP1) connected to said antenna, allowing it to be remotely powered, **characterised in that** said antenna comprises:
- an inductive winding (E1) comprising one or more loops, one end (e1) of which starts from a first connection terminal (c1) on said integrated circuit and the other end (e1') of which arrives at another connection terminal (c1') on said integrated circuit; and
- an inductive winding (E2) comprising one or more loops, one end (e2) of which starts from a first connection terminal (c2) on said peripheral component and the other end (e2') of which arrives at another connection terminal (c2') on said peripheral component,
and **in that** said windings are coupled by current conducting means (v1, v2, v3, 3).

2. The electronic device according to claim 1, wherein said current conducting means linking two windings of said antenna are such that they link one or more connection points on each winding, said connection points of a winding being located close to one end of said winding.

3. The electronic device according to claim 1 or 2, wherein said current conducting means comprise metallised holes.

4. The electronic device according to any one of the preceding claims, wherein two or more windings of said antenna are disposed on the same surface plane, such that a first winding is produced inside a second larger winding and so on, up to the last winding.

5. The electronic device according to any one of the preceding claims, wherein each peripheral component comprises one or more circuits connected in series and/or in parallel between said first (c2) and second (c2') connection terminals on said peripheral component.

6. The electronic device according to any one of the preceding claims, wherein at least said winding (E1) of said integrated circuit and said integrated circuit (CI) are integrated into the thickness of a substantially flat object made of dielectric material (1), said winding being formed on a face of a support layer (2) integrated into the thickness of said object.

7. The device according to claim 6, wherein at least one winding (E2) of a peripheral component and said peripheral component (C2) are integrated into the thickness of said substantially flat object (1).

8. The device according to claim 7, wherein said winding of said peripheral component and said winding of said integrated circuit are formed on the same face of said support layer.

9. The device according to claim 7, wherein said winding of said peripheral component and said winding of said integrated circuit are respectively formed on faces opposite said support layer.

10. The device according to any one of claims 7 to 9, wherein said connection terminals on said integrated circuit and said connection terminals on said peripheral component are produced on the same face of said support layer.

11. The device according to claim 6, wherein said plastic object (100) is placed in a cavity (201) of a unit (200), and wherein at least one winding (E2) of a peripheral component and said peripheral component (CP1) are disposed inside said unit, said winding of said peripheral component being formed in a plane parallel to said object (100).

12. The device according to claim 11, wherein said winding of said peripheral component and said peripheral component are formed on an internal face of a cover (203) of said unit or are integrated into the thickness of said cover, with contact pads (205, 101) of said windings respectively being provided in correspondence on said cover and on the surface of said flat plastic object, so as to come into contact with each other when said cover is closed above the substantially flat object, thus connecting said windings (E1, E2) of said integrated circuit and of said peripheral component.

13. The device according to any one of claims 6 to 12, wherein said flat dielectric object is a chip card in ISO 7816 format or an electronic passport.

14. The device according to any one of the preceding claims, wherein a function of a peripheral component is to warn of the presence of a field of a reader, which function is activated by the feeding of said component.
